# EUROPÄISCHE PATENTANMELDUNG

(11) **EP 1 469 495 A2**
(43) Veröffentlichungstag der Anmeldung: **20.10.2004**
(21) Anmeldenummer: 04007137.5
(22) Anmeldetag: 25.03.2004
(51) Int. Cl.: H01H 9/02, H02G 3/10

(54) **Elektrisches Installationsgerät mit Zusatzmodul**

(30) Priorität: 19.04.2003 DE 10318030
(71) Anmelder: ABB PATENT GmbH, 68526 Ladenburg (DE)
(72) Erfinder: Schlicher, Thomas, Dipl.-Ing., 37520 Osterrode (DE)
(74) Vertreter: Miller, Toivo

(57) **Zusammenfassung**

Es wird ein elektromechanisches Installationsgerät, insbesondere ein elektromechanischer Schalter oder Taster, mit einem an der Bodenseite seines Sockels (6) montiertem Zusatzmodul vorgeschlagen. Dieses Zusatzmodul ist als Installationsbus-Modul (1) ausgebildet, welches einerseits über Anschlusskontakte (2) mit Anschlusskontakten des Sockels (6) verbunden ist und andererseits mit Mitteln, vorzugsweise einer Busklemme (4), für den Anschluss an ein Bussystem versehen ist.

## Beschreibung

Die Erfindung bezieht sich auf ein elektromechanisches Installationsgerät mit Zusatzmodul gemäß dem Oberbegriff des Anspruchs 1. Die Erfindung kann beispielsweise bei elektromechanischen Schaltern und Tastern in Unterputz- oder Aufputzausführung verwendet werden.

Die Bustechnologie hält mittlerweile breiteren Einzug in die Gebäudeinstallation. Zur Ausführung von Befehlen werden üblicherweise Tastsensoren benötigt. Tastsensoren stehen jedoch nicht in allen Schalterprogrammen zur Verfügung. Wählt ein Kunde ein Schalterprogramm aus, bei welchem keine Tastsensoren zur Verfügung stehen, dann ist es erforderlich, die elektromechanischen Schalter oder Taster dieses Schalterprogramms über Binäreingänge an das Bussystem anzukoppeln. Dabei ergibt sich jedoch das Problem, dass bei Ankopplung eines elektromechanischen Schalters oder Tasters über einen Binäreingang aufgrund eines zu kleinen Anschlussraumes nicht mehr auf eine Standard-Unterputzdose zurückgegriffen werden kann. Es sind deshalb spezielle Unterputzdosen mit vergrößerter Tiefe bzw. vergrößertem Anschlussraum notwendig, was den Nachteil einer insgesamt kostenaufwendigeren Montage hat.

Aus der DE 100 13 303 A1 ist ein Ein-/Ausgabegerät zur Verwendung in einem Gebäudeinstallationssystem bekannt, das innerhalb einer für den Einbau in eine Standard-UP-Dose geeignete Gehäuseeinheit enthält:
a) einen Buskoppler und Busanschlüsse für den Anschluss des Geräts an einen Installationsbus (beispielsweise Europäischer Installationsbus EIB),
b) Eingangsklemmen und Schaltungen für den Anschluss von Schalt- oder Tast-Geräten,
c) wenigstens einen elektronischen Schalter einschließlich optischem Koppler zum Schalten wenigstens einer Last, die mit Netzspannung betrieben wird,
d) Ausgangsklemmen und Schaltungen für den Anschluss der wenigstens einen Last.

Aus der EP 0 649 192 A2 ist ein elektrisches Installationsgerät mit einem Gerätesockel mit daran angeordneten Kontakten und Bedienelementen zur Betätigung des elektrischen Installationsgerätes bekannt. An der der Betätigungsseite abgewandten Rückseite des Gerätesockels ist ein Zusatzmodul angeordnet, wobei wenigstens zwei Kontakte mit Verbindungsstücken versehen sind, welche mit dem Zusatzmodul zusammenarbeiten und zu dessen Halterung sowie zu dessen elektrischem Anschluss dienen. Gegenüber der Ausführung ohne Zusatzmodul resultiert nur ein geringer Zuwachs an Bautiefe des mit Zusatzmodul versehenen serienmäßigen Sockels. Das Zusatzmodul kann mit einem Überspannungsschutz, einem Filter, einem Relais, einem elektronischen Fernschalter oder einem Fehlerstromschutzschalter versehen sein.

Aus der DE 44 13 140 C2 ist ein elektrisches Installationsgerät mit Tragring und Sockel bekannt, welcher Sockel an seiner einbauseitigen Rückseite mit einem Zusatzmodul versehen ist, das von einer Leiterplatte mit wenigstens einem in der Leiterplattenebene angeordneten elektronischen Bauelement-beispielsweise ein für den Überspannungsschutz geeigneten Varistor - gebildet ist.

Der Erfindung liegt die Aufgabe zugrunde, ein elektromechanisches Installationsgerät anzugeben, das für den Anschluss an ein Bussystem geeignet und dabei derart dimensioniert ist, dass ein Einbau in Standard-Unterputzdosen erfolgen kann.

Diese Aufgabe wird in Verbindung mit den Merkmalen des Oberbegriffes erfindungsgemäß durch die im Kennzeichen des Anspruchs 1 angegebenen Merkmale gelöst.

Die mit der Erfindung erzielbaren Vorteile bestehen insbesondere darin, dass die aus einem elektromechanischem Installationsgerät (Schalter, Taster) + Installationsbus-Modul gebildete Montageeinheit aufgrund ihrer geringen Abmessungen problemlos in eine Standard-Unterputzdose eingebaut werden kann. Des weiteren muss während der Montage eine spezielle Verkabelung nicht vorgenommen werden, sondern der Anschluss an das Bussystem erfolgt zweckmäßig über eine standardisierte Busklemme. Auf diese Weise werden fehlerhafte Anschlüsse während der Montage zuverlässig verhindert und eine eventuelle, zeitaufwendige Fehlersuche und Fehlerbehebung entfällt. Insgesamt entstehen nur geringe Montagezeiten, was sich vorteilhaft auf die Kosten auswirkt.

Weitere Vorteile sind aus der nachstehenden Beschreibung ersichtlich.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert. Es zeigen:
- Fig.1: eine Seitenansicht eines mit einem elektromechanischen Installationsgerät verbundenen Installationsbus-Moduls,
- Fig. 2: eine Draufsicht auf ein Installationsbus-Modul,
- Fig. 3: eine Seitenansicht eines Installationsbus-Moduls.

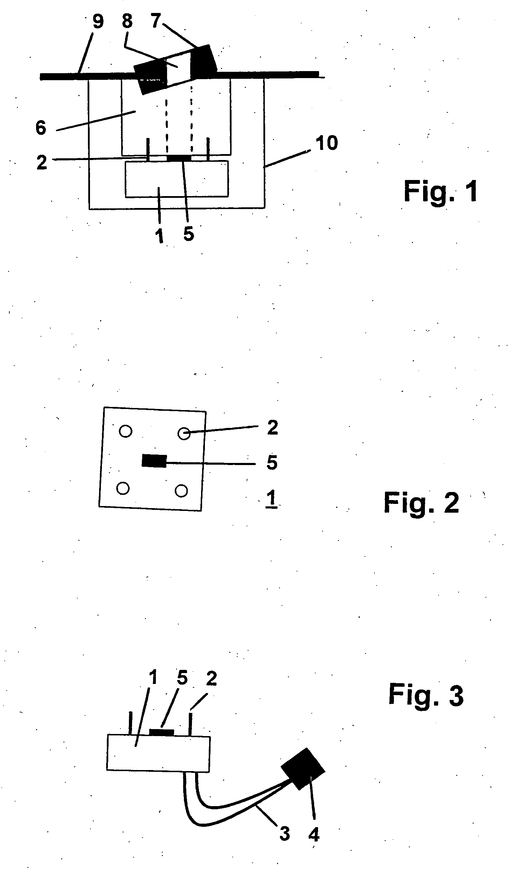

In Fig. 1 ist eine Seitenansicht eines mit einem elektromechanischen Installationsgerät verbundenen Installationsbus-Moduls dargestellt. Das die Form eines Quaders aufweisende Installationsbus-Modul 1 ist über Anschlusskontakte 2 mit Anschlusskontaktenvorzugsweise schraubenlose Anschlussklemmen - eines Sockels 6 des elektromechanischen Installationsgerätes, insbesondere Schalters oder Tasters, elektrisch und zweckmäßig gleichzeitig auch mechanisch verbunden. Das Installationsgerät ist in allgemein bekannter Weise mit einem Tragring 9 versehen und beispielsweise unter Einsatz herkömmlicher Spreizkrallen in einer Unterputzdose 10 (Standard-Unterputzdose) montiert. Eine Wippe 7 des Installationsgerätes dient zur Betätigung eines elektrischen Gerätes, beispielsweise einer Lampe oder eines Jalousiemotors. Von Wichtigkeit ist, dass die aus Sockelhöhe und Modulhöhe gebildete Gesamthöhe der Montageeinheit Installationsgerät + Installationsbus-Modul geringer ist als die Tiefe einer Standard-Unterputzdose.

Vorteilhaft ist es möglich, dasselbe Installationsgerät eines Schalterprogramms sowohl mit als auch ohne Installationsbus-Modul zu verwenden. Bei einem Einsatz des Installationsgerätes im Sinne eines herkömmlichen Schalters oder Tasters werden in die Anschlusskontakte (schraubenlose Anschlussklemmen) des Sockels die erforderlichen Anschlussleitungen eingeführt (Phase, Nulleiter usw.). Bei einem Einsatz des Installationsgerätes im Zusammenwirken mit einem Bussystem werden in die Anschlusskontakte des Sockels die Anschlusskontakte 2 des Installationsbus-Moduls 1 eingeführt.

Das Installationsbus-Modul 1 weist vorzugsweise auf seiner mit den Anschlusskontakten 2 versehenen Hauptoberfläche eine Beleuchtungseinheit 5, vorzugsweise eine Leuchtdiode auf. Das von dieser Beleuchtungseinheit 5 abgestrahlte Licht gelangt durch einen Schacht respektive eine entsprechende Ausnehmung im Sockel 6 bis zur Wippe 7, welche mit einem zentralen Sichtfenster 8 versehen ist, wodurch eine aktivierte (eingeschaltete) Beleuchtungseinheit durch das Sichtfenster 8 der Wippe 7 erkennbar ist. Die Beleuchtungseinheit 5 kann beispielsweise einen besonderen Schaltzustand des Installationsgerätes signalisieren und/oder allgemein dazu dienen, das schnelle Auffinden der Wippe bei Dunkelheit zu ermöglichen.

In Fig. 2 ist eine Draufsicht auf ein Installationsbus-Modul dargestellt. Die erkennbare, quadratisch ausgebildete Hauptoberfläche des Installationsbus-Moduls 1 ist mit vier stiftförmigen Anschlusskontakten 2 versehen, welche sich jeweils in der Nähe der vier Ecken befinden. Im Zentrum der Hauptoberfläche des Installationsbus-Moduls 1 befindet sich die Beleuchtungseinheit 5.

In Fig. 3 ist eine Seitenansicht eines Installationsbus-Moduls dargestellt. Die wesentlichen erkennbaren Komponenten des Installationsbus-Moduls 1 sind
- die bereits vorstehend erwähnten stiftförmigen Anschlusskontakte 2 und die Beleuchtungseinheit 5 auf der dem Sockel 6 des Installationsgerätes zugewandten Hauptoberfläche sowie
- Anschlusskabel 3 auf der dem Boden der Unterputzdose 10 zugewandten Hauptoberfläche, wobei diese Änschlusskabel 3 endseitig mit einer standardisierten Busklemme 4 zur elektrischen Verbindung mit einem Bussystem, beispielsweise EIB (Europäischer Installationsbus), KNX (Konnex Association), LON (Lokal Operating Network) versehen sind.

### Bezugszeichenliste:

- 1: Installationsbus-Modul
- 2: stiftförmige Anschlusskontakte zur elektrischen Verbindung mit Anschlusskontakten des Sockels
- 3: Anschlusskabel
- 4: standardisierte Busklemme
- 5: Beleuchtungseinheit (Leuchtdiode)
- 6: Sockel eines elektromechanischen Installationsgerätes (Schalter, Taster)
- 7: Wippe
- 8: Sichtfenster
- 9: Tragring des Installationsgerätes
- 10: standardisierte Unterputzdose

## Patentansprüche

1. Elektromechanisches Installationsgerät, insbesondere elektromechanischer Schalter oder Taster, mit einem an der Bodenseite seines Sockels (6) montiertem, als Installationsbus-Modul (1) ausgebildetem Zusatzmodul, welches mit Mitteln für den Anschluss an ein Bussystem versehen ist, **dadurch gekennzeichnet, dass** das Installationsbus-Modul (1) über mehrere stiftförmige, sich jeweils in der Nähe der vier Ecken befindliche Anschlusskontakte (2) mit schraubenlosen Anschlussklemmen des Sockels (6) des Installationsgerätes gleichzeitig elektrisch und mechanisch verbunden ist.

2. Installationsgerät nach Anspruch 1, **dadurch gekennzeichnet, dass** das Installationsbus-Modul (1) mit einer Busklemme (4) versehen ist.

3. Installationsgerät nach Anspruch 2, **dadurch gekennzeichnet, dass** die Busklemme (4) über Anschlusskabel (3) mit dem Installationsbus-Modul (1) verbunden ist.

4. Installationsgerät nach einem der vorstehenden Ansprüche, **dadurch gekennzeichnet, dass** das Installationsbus-Modul (1) mit einer Beleuchtungseinheit (5), vorzugsweise eine Leuchtdiode, versehen ist, deren Lichtstrahl durch ein Sichtfenster (8) des Installationsgerätes erkennbar ist.

5. Installationsgerät nach Anspruch 4, **dadurch gekennzeichnet, dass** das Sichtfenster (8) in einer Wippe (7) angeordnet ist.
